Europäisches Patentamt

**European Patent Office**

**Office européen des brevets**

(19)

(11) Veröffentlichungsnummer: **0 003 998**
**B1**

# (12) EUROPÄISCHE PATENTSCHRIFT

(45) Veröffentlichungstag der Patentschrift:
**14.07.82**

(21) Anmeldenummer: **79100521.8**

(22) Anmeldetag: **22.02.79**

(51) Int. Cl.³: **B 31 B 23/60,** B 29 C 27/06

(54) **Maschine zum Bearbeiten einer Werkstoffbahn mittels eines Schweisswerkzeuges.**

(30) Priorität: **09.03.78 DE 2810127**
**09.03.78 DE 2810204**

(43) Veröffentlichungstag der Anmeldung:
**19.09.79 Patentblatt 79/19**

(45) Bekanntmachung des Hinweises auf die Patenterteilung:
**14.07.82 Patentblatt 82/28**

(84) Benannte Vertragsstaaten:
**BE CH FR GB IT NL SE**

(56) Entgegenhaltungen:
**DE-A-2 010 961**
**US-A-3 797 368**

(73) Patentinhaber: **Stiegler, Karl Heinz, Werastrasse 24,
D-7000 Stuttgart 1 (DE)**

(72) Erfinder: **Schulze, Ehrhart, Köningsberger Strasse 11,
D-7012 Fellbach (DE)**

(74) Vertreter: **Bartels, Hans et al, Patentanwälte Bartels,
Held, Wolff Lange Strasse 51, D-7000 Stuttgart 1 (DE)**

EP 0 003 998 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Maschine zum Bearbeiten einer Werkstoffbahn mittels eines Schweißwerkzeuges

Die Erfindung betrifft eine Maschine zum Bearbeiten einer mit gleichförmiger Geschwindigkeit fortbewegten Werkstoffbahn mittels eines Schweißwerkzeuges mit den im Oberbegriff des Anspruchs 1 genannten Merkmalen, insbesondere auf eine Maschine zum Herstellen von Kunststoffbeuteln aus einer einmal um eine ihrer Längslinien gefalteten thermoplastischen Kunststoffbahn, bei der das Schweißwerkzeug die einzelnen Beutel voneinander trennt und dabei gleichzeitig die Seitennähte herstellt.

Durch die DE-A-2 010 961 ist eine Maschine dieser Art bekannt, bei der als Vorschaltgetriebe ein Kardangelenk vorgesehen ist, dessen Auslesewinkel einstellbar ist und bei dem die Gelenkzapfen senkrecht aufeinander stehen.

Dadurch wird eine gleichförmige Drehbewegung in eine ungleichförmige Drehbewegung der Abtriebswelle des Vorschaltgetriebes umgewandelt. Durch Veränderung des Auslesewinkels des Kardangelenkes kann die Ungleichförmigkeit der Drehbewegung der Abtriebswelle des Vorschaltgetriebes verändert werden. Wird die Werkstoffbahn mit einer immer gleichbleibenden Geschwindigkeit angetrieben, dann erhält man bei einem Auslenkwinkel Null einen gleichmäßigen Umlauf der Abtriebswelle des Vorschaltgetriebes und dadurch die längsten durch das Schweißen abgeteilten Abschnitte, z. B. die breitesten Beutel. Um kleine Abschnitte zu erzeugen, müßte daher die Drehzahl des Schweißwerkzeuges und damit des Vorschaltgetriebes erhöht und der Auslenkwinkel des Kardangelenkes so verändert werden, daß die Minimalgeschwindigkeit des Werkzeuges der Geschwindigkeit der Werkstoffbahn entspricht. Die Einstellung auf kürzere Abschnitte oder auf schmälere Beutel erfordert in diesem Falle zwei Steuerungsmaßnahmen, nämlich einmal die Änderung der Ungleichförmigkeit der Drehbewegung der Abtriebswelle des Vorschaltgetriebes und eine Erhöhung der Drehzahl des Antriebes des Vorschaltgetriebes, bis die Minimalgeschwindigkeit des Werkzeuges der Geschwindigkeit der Werkstoffbahn entspricht. Durch die Vergrößerung der Drehzahl des Antriebes des Vorschaltgetriebes werden die durch die zyklisch erzeugten Beschleunigungen und Verzögerungen des Vorschaltgetriebes verursachten Belastungen desselben zusätzlich vergrößert.

Die bekannte Maschine hat für den Antrieb der Werkstoffbahn noch ein zweites steuerbares Getriebe mit einstellbarem Übersetzungsverhältnis. Dieses zweite Getriebe müßte beim Verstellen der Ungleichförmigkeit des ersten Vorschaltgetriebes so eingestellt werden, daß die Geschwindigkeit der Werkstoffbahn der Minimalgeschwindigkeit des Werkzeuges angepaßt ist, was dort jedoch nicht vorgesehen ist. Auch in diesem Fall müßten jedoch zwei getrennte Steuerungsmaßnahmen vorgenommen werden, wobei in beiden Fällen eine Anpassung der Geschwindigkeit des Werkzeuges und der Werkstoffbahn durchgeführt werden muß.

Die Einstellung der bekannten Maschine auf das Schweißen verschieden langer Abschnitte oder verschieden breiter Beutel ist also verhältnismäßig kompliziert und kann daher nur von einem gut geschulten Personal durchgeführt werden.

Der Erfindung liegt die Aufgabe zu Grunde, eine Maschine der eingangs genannten Art zu schaffen, die durch einen einzigen Handgriff auf das Schweißen verschiedener Abschnitte oder verschieden breiter Beutel eingestellt werden kann.

Diese Aufgabe ist gemäß der Erfindung durch die im Kennzeichen des Anspruchs 1 genannten Merkmale gelöst. Dadurch, daß das zweite Getriebe zum stufenlosen Einstellen des Übersetzungsverhältnisses ausgebildet ist, wird die Möglichkeit geschaffen, die Vorschubgeschwindigkeit der Werkstoffbahn jeweils der Werkzeuggeschwindigkeit anzupassen. Man kann also schon bei gleichbleibender Drehzahl und bei gleichbleibender Ungleichförmigkeit der Bewegung des Werkzeuges allein durch Änderung der Phasenlage des Vorschaltgetriebes die Geschwindigkeit der Werkstoffbahn den verschiedenen Geschwindigkeiten der Abtriebswelle des Vorschaltgetriebes anzupassen und dadurch verschieden lange Beutel herzustellen. Man kann aber auch die Vorschubgeschwindigkeit der Werkstoffbahn jeweils immer der Minimalgeschwindigkeit des Werkzeuges angleichen. Durch die Verwendung der die beiden Getriebe kuppelnden Kupplungseinrichtung wird erreicht, daß zum Einstellen verschieden langer Abschnitte oder verschieden breiter Beutel lediglich die Kupplungseinrichtung eingestellt werden muß, ohne daß das die Maschine bedienende Personal durch andere Steuerungsmaßnahmen belastet ist.

Bei einer vorteilhaften Ausführungsform der Erfindung ist vorgesehen, daß das Vorschaltgetriebe und das zweite Getriebe von dem Schneckenrad eines Schneckengetriebes antreibbar sind, dessen Schnecke mit einem gemeinsamen Antrieb verbunden ist. Durch die Zwischenschaltung des Schneckengetriebes zwischen Antrieb und Vorschaltgetriebe wird eine sehr wesentliche Verringerung der Belastung des Antriebes durch die Ungleichförmigkeit der Drehung der Abtriebswelle des Vorschaltgetriebes erreicht.

Bei einer weiteren vorteilhaften Ausführungsform ist als Antrieb ein Motor mit steuerbarer Drehzahl, vorzugsweise ein Gleichstrommotor, vorgesehen. Dadurch wird erreicht, daß man bei gleicher Länge der von der Werkstoffbahn abgeschweißten Abschnitte, z. B. bei gleicher Beutelbreite, die Schweißdauer beliebig einstellen kann, so daß durch die Einstellung der Drehzahl des Gleichstrommotors die Schweißdauer verschiedenen Materialien der Werkstoffbahn angepaßt werden kann.

Ein weiterer Nachteil der bekannten Maschine besteht darin, daß die Abtriebswelle des Kardangelenkes während jeder Umdrehung der Antriebswelle die sich zyklisch wiederholende ungleichförmige Bewegung zweimal ausführt. Aus diesem Grunde ist bei der bekannten Maschine dem das Schweißwerkzeug antreibenden Kardangelenk ein Rädergetriebe vorgeschaltet, dessen Übersetzungsverhältnis derart gewählt ist, daß je Umlauf des Schweißwerkzeuges das Kardangelenk einen halben Umlauf ausführt. Dadurch wird der Aufwand für das Vorschaltgetriebe wesentlich erhöht.

Bei einer besonders vorteilhaften Ausführungsform der Erfindung ist als Vorschaltgetriebe ein umlaufendes Kurbelschleifengetriebe vorgesehen. Dadurch wird insbesondere dann, wenn der Schleifenarm des Kurbelschleifengetriebes mit der gleichförmig umlaufenden Welle des Antriebes und die Kurbelwelle mit dem Schweißwerkzeug verbunden sind, eine wesentlich größere Verstellmöglichkeit der Länge der Abschnitte zwischen zwei Schweißungen erreicht.

Die Erfindung ist in der folgenden Beschreibung eines Ausführungsbeispieles einer erfindungsgemäßen Maschine anhand der Zeichnung im einzelnen erläutert.

Es zeigt

Fig. 1 eine stark vereinfachte, perspektivische Darstellung nur der wesentlichsten Teile der Maschine, aus der die Zusammenwirkung dieser Teile ersichtlich ist;

Fig. 2 eine schematisch stark vereinfachte Seitenansicht der Einzugswalzen, der Schweißwalzen und des Bandförderers der Maschine nach Fig. 1;

Fig. 3 einen Axialschnitt des Vorschaltgetriebes;

Fig. 4 einen Schnitt nach der Linie IV-IV in Fig. 3;

Fig. 5 ein Blockschaltbild der Steuerung der Maschine nach den Fig. 1 bis 4.

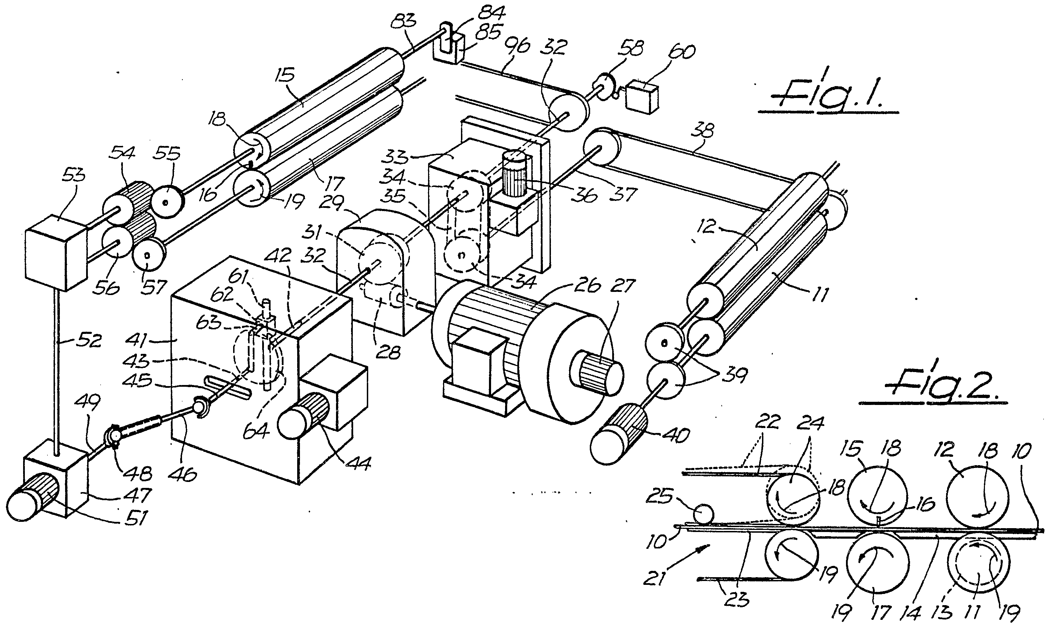

Aus Gründen der Übersichtlichkeit ist in Fig. 1 das Maschinengestell nicht dargestellt. Auch sind die einzelnen Teile der Maschine räumlich nicht immer in der richtigen Weise dargestellt, da sie sich sonst überdecken würden und der Zweck der Fig. 1, die funktionelle Zusammenwirkung der einzelnen Teile darzustellen, nicht zu erfüllen wäre.

Die dargestellte Maschine ist vor allem dazu vorgesehen, von einer um eine ihrer Längslinien U-förmig zusammengefalteten Folienbahn durch Querschweißungen gleich breite Beutel abzutrennen und dabei gleichzeitig die Seitennähte durch Verschweißung zu bilden. Dieser Vorgang wird im allgemeinen als Trennschweißen bezeichnet. Die Maschine ist aber auch dazu geeignet, einlagige thermoplastische Folien in gleich lange Abschnitte durch das Schweißen zu zerlegen oder z. B. einen Verbundfolienschlauch, der auf seiner Innenseite eine thermoplastische Schicht trägt und flach zusammengelegt ist, mit Querschweißnähten zu versehen. Ein solcher, mit Querschweißnähten versehener Verbundfolienschlauch kann in einem nächsten Arbeitsgang mittels eines Messers, das neben den Schweißnähten liegende Schnitte ausführt, in einzelne Beutel zerlegt werden.

In Fig. 2 ist dargestellt, wie eine solche Werkstoffbahn 10 von zwei Einzugswalzen 11 und 12, von denen die untere 11 mit Ringnuten 13 versehen ist, in die die einzelnen Stege eines Führungsrostes 14 eingreifen, über diesen Rost einer Schweißwalze 15 zugeführt wird, die ein sich längs einer ihrer Mantellinien erstreckendes Schweißwerkzeug 16 trägt und die in einem Abstand über einer Gegenwalze 17 angeordnet ist. Die Walzen 15 und 17 laufen in Richtung der Pfeile 18 bzw. 19 mit einer ungleichförmigen Winkelgeschwindigkeit um. Der Antrieb dieser Walzen ist dabei so eingestellt, daß das Schweißwerkzeug 16 immer dann die Werkstoffbahn 10 berührt, wenn die Umfangsgeschwindigkeit des Schweißwerkzeuges 16 ihren Mindestbetrag erreicht. Gleichzeitig werden die Einzugswalzen 11 und 12 in Richtung der Pfeile 18 und 19 mit einer Umfangsgeschwindigkeit angetrieben, die der Mindestgeschwindigkeit des Schweißwerkzeuges 16 entspricht. Den beiden Walzen 15 und 17 ist in bekannter Weise ein Bandförderer 21 nachgeschaltet, der in bekannter Weise aus oberen und unteren Förderbändern 22 bzw. 23 besteht, deren untere bzw. obere Fördertrume einen Förderspalt für den vom Schweißwerkzeug 16 abgetrennten Werkstoffbahnabschnitt bilden. Die den Schweißwalzen 15 und 17 benachbarte obere Umlenkwalze 24 ist ebenfalls in bekannter Weise auf- und abbewegbar gelagert und bewegt sich immer dann nach unten, wenn das Schweißwerkzeug die Werkstoffbahn 10 berührt. Der Bandförderer 21 wird hierbei mit einer etwas größeren Geschwindigkeit angetrieben als die Einzugswalzen 11 und 12, so daß der abgetrennte Werkstoffbahnabschnitt sofort nach seiner Abtrennung mit einer erhöhten Geschwindigkeit von der Werkstoffbahn 10 abgezogen wird. Sobald die Vorderkante der Werkstoffbahn 10 den Förderspalt des Bandförderers 21 erreicht, wird durch eine geeignete Nockensteuerung die Umlenkwalze 24 wieder nach oben bewegt, so daß die unteren Trume der Förderbänder 22 einen sich von einer Umlenkwalze 25 aus öffnenden Einführwinkel mit den oberen Trumen der Förderbänder 23 bilden.

In Fig. 1 sind schematisch die wichtigsten Teile des Antriebes der Einzugswalzen 11 und 12 und der Schweißwalzen 15 und 17 dargestellt. Beide diese Walzenpaare werden von einem gemeinsamen Gleichstrommotor 26 angetrieben, dessen Drehzahl von einem Tachometer 27 angegeben wird und auf einen gewünschten Wert eingestellt werden kann. Dieser Gleichstrommotor 26 treibt die Schnecke 28 eines Schneckengetriebes 29 an, dessen Schneckenrad 31 auf einer durchgehenden Schneckenradwelle 32 befestigt ist. Das eine Ende dieser Schneckenradwelle 32 ist mit einem Getriebe 33 verbunden, das in bekannter, in Fig. 1 nur gestrichelt angedeuteter Weise aus zwei verzahnten Kegelscheibenpaaren 34 und einer Lamellenkette 35 besteht und dessen Übersetzungsverhältnis mittels eines Stellmotors 36 auf einen gewünschten Wert einstellbar ist. Der Abtrieb 37 dieses steuerbaren Getriebes 33 ist über einen Zahnbandtrieb 38 mit der unteren Einzugswalze 11 verbunden, die über Zahnräder 39 mit der Einzugswalze 12 für eine gleich schnelle aber entgegengesetzte Drehung verbunden ist. Zum Anzeigen der Drehzahl dieser Einzugswalzen 11 und 12 ist ein Tachogenerator 40 vorgesehen.

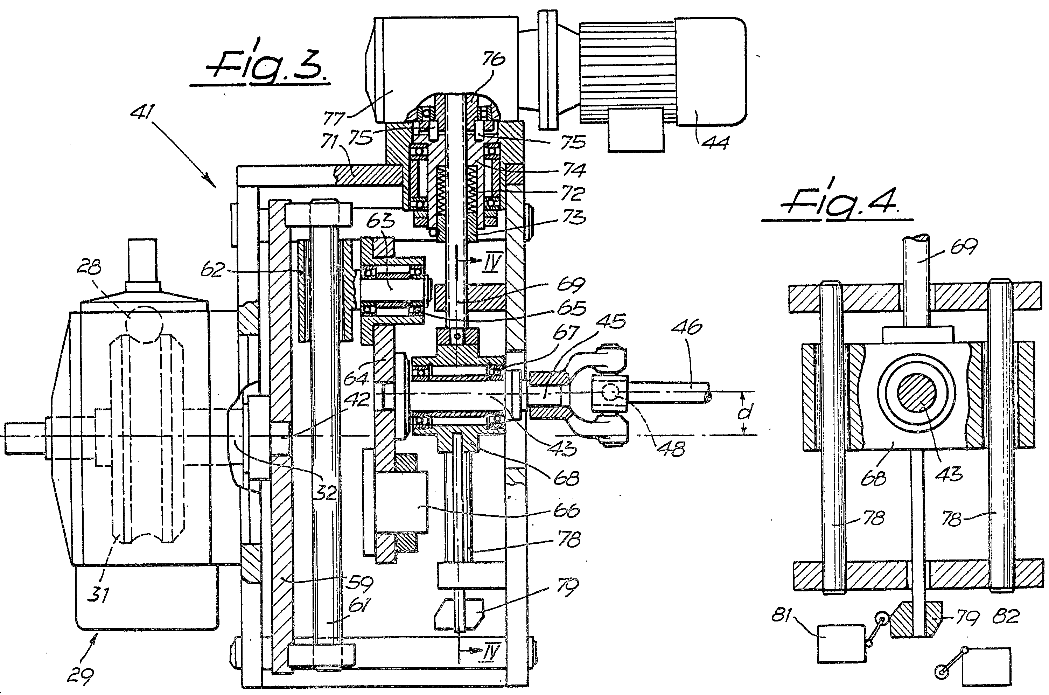

Das andere Ende der Schneckenradwelle 32 ist mit einem Vorschaltgetriebe 41 verbunden, das eine gleichförmige Drehbewegung in eine ungleichförmige Drehbewegung umwandelt, bei der sich die Winkelgeschwindigkeit zyklisch bei jedem Umlauf nach einer im Getriebe einstellbaren Funktion ändert. Das im einzelnen in den Fig. 3 und 4 dargestellte Vorschaltgetriebe ist ein umlaufendes Kurbelschleifengetriebe, dessen Schleifenarmwelle 42 mit der Schneckenwelle 32 verbunden ist und dessen Kurbelwelle 43 in einer die Schleifenarmwelle 42 enthaltenden Ebene durch einen Stellmotor 44 verstellbar ist und die Abtriebswelle 45 des Vorschaltgetriebes 41 bildet. Diese Abtriebswelle 45 ist über eine teleskopierende Kreuzgelenkwelle 46 mit einem Kegelradgetriebe 47 verbunden. Damit die Kreuzgelenkwelle 46 die Drehbewegung der Abtriebswelle 45 innerhalb von deren ganzem Verstellbereich möglichst unverfälscht auf das Kegelradgetriebe 47 überträgt, sind die mit der Kreuzgelenkwelle 46 fest verbundenen Gelenkzapfen 48 in einer gemeinsamen Ebene angeordnet und das Kegelradgetriebe 47 ist so angeordnet, daß die Winkel zwischen der Kreuzgelenkwelle 46 einerseits und der Abtriebswelle 45 sowie der Eingangswelle 49 des Kegelradgetriebes 47 andererseits gleich groß, wenn sich die Kurbelwelle 43 in ihrer Mittelstellung befindet. Zum Anzeigen der vom Vorschaltgetriebe 41 verursachten Winkelgeschwindigkeit ist am Kegelradgetriebe 47 ein Tachogenerator 51 vorgesehen.

Das Kegelradgetriebe 47 ist über eine Welle 52 und ein zweites Kegelradgetriebe 53 mit einem Zahnrad 54 verbunden, das mit zwei Zahnrädern 55 und 56 in Eingriff steht. Das Zahnrad 55 ist mit der Schweißwalze 15 und das Zahnrad 56 über ein weiteres Zahnrad 57 mit der Gegenwalze 17 verbunden, so daß beide Walzen 15 und 17 in den durch die Pfeile 18 bzw. 19 angegebenen entgegengesetzten Drehrichtungen angetrieben werden.

Wie aus Fig. 1 ersichtlich ist, geht die Schneckenradwelle 32 durch das Getriebe 33 hindurch und treibt dort Glieder an, die im Takte dem Takt des Schweißwerkzeuges 16 angepaßt sein müssen. In diesem Takt muß z. B. eine Nockenscheibe angetrieben werden, die die in Fig. 2 dargestellte Umlenkwalze 24 des Bandförderers 21 auf- und abbewegt. Zu diesem Zweck ist der Zahnriementrieb 96 vorgesehen. Weiterhin ist auf dieser Verlängerung der Schneckenradwelle 32 eine Nockenscheibe 58 vorgesehen, die einen Schalter 60 betätigt, der den Stellmotor 36 unwirksam macht, wenn sich das Schweißwerkzeug 16 in seiner Schweißstellung befindet, damit während des Schweißens die Geschwindigkeit der Werkstoffbahn 10 nicht geändert werden kann.

Zum Anzeigen, wann sich das Schweißwerkzeug 16 in der Schweißstellung befindet, ist an der mit der Schweißwalze fest verbundenen Welle 83 eine Fahne 84 befestigt, die durch Induktion oder Kapazitätsänderung einen Signalgeber 85 so beeinflußt, das dieser immer dann ein elektrisches Signal abgibt, wenn sich das Schweißwerkzeug 16 in der in Fig. 1 dargestellten Schweißstellung befindet.

In den Fig. 3 und 4 ist das Vorschaltgetriebe 41 in seiner bevorzugten Ausführungsart ausführlicher dargestellt. Die mit der Schneckenradwelle 32 fest verbundene Schleifenarmwelle 42 trägt eine konzentrisch auf ihr befestigte Scheibe 59. Eine den Schleifenarm des Kurbelschleifengetriebes bildende Führungsstange 61 ist diametral zur Schleifenarmwelle 42 verlaufend mit ihren beiden Enden in einem Abstand von der Scheibe 59 mit dieser fest verbunden. Auf dieser Führungsstange 61 ist ein Gleitstein 62 geführt, an dem ein Kurbelzapfen 63 befestigt ist, der in dem als Scheibe 64 ausgebildeten Kurbelarm der Kurbel des Kurbelschleifengetriebes mittels eines Kugellagers 65 drehbar gelagert ist. Diametral gegenüber dem Kurbelzapfen 63 ist in der den Kurbelarm bildenden Scheibe 64 eine Gegenmasse 66 befestigt, um die durch den Gleitstein 62 und den Kurbelzapfen 63 gebildete Unwucht auszugleichen. Die Scheibe 64 ist auf der Kurbelwelle 43 befestigt, die mittels eines Kugellagers 67 in einem Lager 68 drehbar gelagert ist. Das Lager 68 ist an einer Stellspindel 69 befestigt, die mit einem Außengewinde versehen ist, auf das eine Stellmutter aufgeschraubt ist, die drehbar, aber axial unverschiebbar im Gestell 71 des Vorschaltgetriebes 41 gelagert ist und aus zwei drehfest miteinander verbundenen und durch eine zwischengefügte Tellerfeder 72 spielfrei verspannten Teilmuttern 73 und 74 besteht. Die Stellmutter 73, 74 ist durch Mitnehmerstifte 75 mit dem Schneckenrad 76 eines Schneckengetriebes 77 verbunden, dessen Schnecke vom Stellmotor 44 antreibbar ist, um den Abstand d zwischen der Schleifenarmwelle 42 und der Kurbelwelle 43 und damit die Ungleichförmigkeit der Drehung der Abtriebswelle 45 nach Bedarf einzustellen.

Wie aus Fig. 3 ersichtlich ist, ist das Kurbelwellenlager 68 außerdem von zwei einander parallelen Führungsstangen 78 geführt und mit einer Nockenplatte 79 verbunden, die mit zwei Endschaltern 81 und 82 zusammenwirkt, um die Endlagen des Lagers 68 festzulegen.

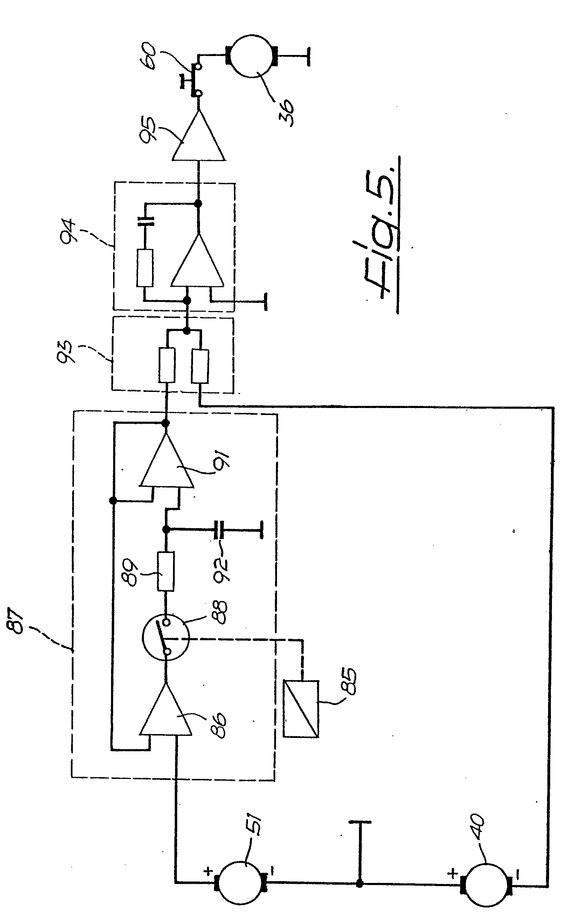

In Fig. 5 ist die Schaltung der selbsttätigen Steuerung der oben beschriebenen Maschine dargestellt. Der positive Pol des Tachogleichstromgenerators 51 ist mit dem nicht invertierenden Eingang eines ersten Operationsverstärkers 86 einer Abtast- und Halteschaltung 87 verbunden, der über einen elektronischen Schalter 88, z. B. einen Feldeffekttransistor, und einen Widerstand 89 mit dem nicht invertierenden Eingang eines zweiten Operationsverstärkers 91 verbunden ist. Dieser Eingang des Operationsverstärkers 91 ist mit einem Kondensator 92 verbunden, der dazu dient, über den Schalter 88 eingegangene Spannungen zu speichern. Der gleichzeitig den Ausgang des Abtast- und Halteverstärkers 87 bildende Ausgang des Operationsverstärkers 91 ist mit dem einen Eingang eines Additionsgliedes 93 verbunden, dessen zweiter Eingang mit dem negativen Pol des Tachogleichstromgenerators 40 verbunden ist. Der negative Pol des Tachogenerators 51 und der positive Pol des Tachogenerators 40 liegen an Masse. In dem Additionsglied 93 werden also die positive, vom Tachogenerator 51 kommende Spannung mit der negativen, vom Tachogenerator 40 kommenden Spannung algebraisch addiert und somit die Differenz zwischen den beiden Tachoanzeigen gebildet. Diese im Additionsglied 93 erzeugte Differenzspannung wird dem invertierenden Eingang eines weiteren Operationsverstärkers 94 und über dessen Ausgang sowie über einen Leistungsverstärker 95 dem Stellmotor 36 des steuerbaren Getriebes 33 zugeführt. Der elektronische Schalter 88 ist mit dem Ausgang des Signalgebers 85 verbunden und wird durch das Signal immer dann geschlossen, wenn sich das Schweißwerkzeug 16 in der Schweißstellung befindet.

Während des Betriebes läuft der Motor 26 mit gleichbleibender Drehzahl um und treibt über das Getriebe 33 die Einzugswalzen 11 und 12 und über das Getriebe 41 die Schweißwalze 15 und die Gegenwalze 17 an. Je nach der Größe des Abstandes d der Schleifenarmwelle 42 von der Kurbelarmwelle 43, der durch Betätigung des Stellmotors 44 einstellbar ist, kann die Ungleichförmigkeit der Drehbewegung der Kurbelwelle 43 und damit der Schweißwalze 15 in bestimmten Grenzen eingestellt werden. Die Anordnung ist hierbei so getroffen, daß der Abstand d von einem kleinen Wert, bei dem die Achsen der Wellen 42 und 43 fast fluchten, bis zu einem größeren Wert verstellbar ist, wie das aus Fig. 3 ersichtlich ist. Hierbei ist das Schweißwerkzeug 16 auf der Walze 15 so angeordnet, daß es sich bei seiner Mindestgeschwindigkeit in der in den Fig. 1 und 2 dargestellten Schweißstellung befindet und sich somit beschleunigt aus dieser Stellung wegbewegt, was für das Lösen des Schweißwerkzeuges von der Werkstoffbahn wichtig ist, weil beim Schweißen ein Haftenbleiben der Werkstoffbahn am Schweißwerkzeug 16 sonst nicht zu vermeiden wäre. Aus diesem Grunde muß auch beim Einstellen des Abstandes d vermieden werden, daß dieser auf Null eingestellt werden kann, da dann das Schweißwerkzeug 16 mit gleichförmiger Geschwindigkeit umläuft, was, wie gesagt, dazu führen kann, daß die Werkstoffbahn am Schweißwerkzeug 16 anklebt und dadurch Störungen verursacht werden.

Damit die Werkstoffbahn 10 sich während des Schweißvorganges mit der gleichen Geschwindigkeit bewegt wie das Schweißwerkzeug 16, muß die Geschwindigkeit der Einzugswalzen 11 und 12 durch das steuerbare Getriebe 33 der Geschwindigkeit des Schweißwerkzeuges 16 angepaßt werden. Dies geschieht durch die in Fig. 5 dargestellte Schaltung. Durch die Abtast- und Halteschaltung 87, die hier als Analogspeicher wirkt, wird nur die Geschwindigkeit des Schweißwerkzeuges 16 während des Schweißvorganges, also während es die Werkstoffbahn 10 berührt, im Kondensator 92 gespeichert. Diese selektive Speicherung der Schweißwerkzeuggeschwindigkeit wird dadurch erreicht, daß die an der Welle 83 befestigte Fahne 84 den Signalgeber 85 nur dann zur Abgabe eines Signals anregt, wenn sich das Schweißwerkzeug 16 in der Schweißstellung befindet, was sich durch eine entsprechende Anordnung der Fahne 84 an der Welle 83 und des Sensors des Signalgebers 85 genau einstellen läßt. Sobald der Signalgeber 85 sein Signal abgibt, wird der Schalter 88 in der Abtast- und Halteschaltung 87 geschlossen, so daß die in diesem Augenblick vom Tachogenerator 51 erzeugte Spannung im Kondensator 92 gespeichert werden kann. Diese Spannung liegt am hochohmigen Eingang des Operationsverstärkers 91 an und wird von diesem dem Additionsglied zugeleitet, wo diese Spannung mit der Spannung des Tachogenerators 40 verglichen wird, die der Drehzahl der Einzugswalzen 11 und 12 entspricht. Durch die algebraische Addition der beiden entgegengesetzt gerichteten Spannungen der Tachogeneratoren 40 und 51 im Additionsglied 93 wird die Differenz zwischen den absoluten Beträgen dieser Spannungen gebildet, die am Operationsverstärker 94 invertiert über den Leistungsverstärker 95 dem Stellmotor 36 zugeführt wird, der durch diese Spannung das Übersetzungsverhältnis des steuerbaren Getriebes 33 so verändert, daß die im Additionsglied 93 gemessene Spannungsdifferenz bis auf Null verringert wird. Zwischen den Leistungsverstärker 95 und den Stellmotor 36 ist der von der Nockenscheibe 58 betätigte Schalter 60 geschaltet, der immer dann geöffnet wird, wenn sich das Schweißwerkzeug 16 in der Schweißstellung befindet, um bei einer selbsttätigen Regelung der Einzugswalzengeschwindigkeit zu vermeiden, daß diese Geschwindigkeit während eines Schweißvorganges geändert wird.

Im theoretischen Grenzfall, wenn der Achsabstand d der Achsen der Wellen 42 und 43 gleich Null wäre, würde das Schweißwerkzeug 16 mit gleichförmiger Geschwindigkeit umlaufen. Bei einer Vergrößerung des Abstandes d wird die Ungleichförmigkeit der Umlaufgeschwindigkeit des Schweißwerkzeugs 16 vergrößert, d. h., der Unterschied der maximalen und der minimalen Umlaufgeschwindigkeiten des Schweißwerkzeugs wird vergrößert. Da aber die Laufgeschwindigkeit der Werkstoffbahn 10 automatisch immer der Mindestgeschwindigkeit des Schweißwerkzeugs 16 angepaßt wird, verringern sich mit zunehmendem d die Abstände der Schweißstellen auf der Werkstoffbahn. Wird die oben beschriebene Maschine zum Herstellen von Kunststoffbeuteln benutzt, kann daher durch Vergrößern des Abstandes d die Breite der zu schweißenden Beutel verringert werden.

Ändert man die Geschwindigkeit des Antriebsmotors 26, dann ändert sich bei einem bestimmten Abstand d das Verhältnis der Umlaufzeit des Schweißwerkzeuges 16 zu der Vorschubgeschwindigkeit der Werkstoffbahn 10 nicht, so daß bei allen Geschwindigkeiten des Antriebsmotors 16 die Abstände zwischen den Schweißstellen auf der Werkstoffbahn gleichbleiben. Es ändert sich hierbei lediglich die Schweißdauer, so daß man es in der Hand hat, durch die Regelung der Drehzahl des Motors 16 die für eine bestimmte Werkstoffbahn geeignete Schweißdauer einzustellen.

Durch das Schneckengetriebe 29 wird erreicht, daß die durch die ungleichförmige Umlaufgeschwindigkeit des Abtriebes 45 des Vorschaltgetriebes 41 erzeugte ungleichmäßige Belastung sich nur in vernachlässigbar geringem Maße auf den Motor 26 auswirkt.

Bei dem dargestellten Ausführungsbeispiel sind der Träger der Kurbelschleifenstange 61 und der Kurbelarm als Scheiben 59 bzw. 64 ausgebildet. Diese beiden Teile können aber auch als ausgewuchtete, sich diametral zur Schleifenarmwelle 42 bzw. zur Kurbelwelle 43 erstreckende Arme ausgebildet sein.

## Patentansprüche

1. Maschine zum Bearbeiten einer mit gleichbleibender Geschwindigkeit in ihrer Längsrichtung bewegten Werkstoffbahn (10) mittels eines Schweißwerkzeuges (16), das auf einer die Werkstoffbahn (10) berührenden Umlaufbahn umläuft und über ein steuerbares Vorschaltgetriebe (41) mit ungleichförmiger Geschwindigkeit antreibbar ist, wobei für den Antrieb der Werkstoffbahn (10) ein zweites steuerbares Getriebe (33) mit einstellbarem Übersetzungsverhältnis vorhanden ist, dadurch gekennzeichnet, daß das zweite Getriebe (33) zum stufenlosen Einstellen des Übersetzungsverhältnisses ausgebildet ist und daß eine beide Getriebe (33, 41) koppelnde Kopplungseinrichtung (40, 51, 87, 93) vorhanden ist, die beim Einstellen des einen Getriebes (41) selbsttätig das andere Getriebe (33) so einstellt, daß während der Berührung des Schweißwerkzeuges (16) mit der Werkstoffbahn (10) sich diese beiden Teile mit im wesentlichen gleicher Geschwindigkeit bewegen.

2. Maschine nach Anspruch 1, dadurch gekennzeichnet, daß das Vorschaltgetriebe (41) und das zweite Getriebe (33) von dem Schneckenrad (31) eines Schneckengetriebes (29) antreibbar sind, dessen Schnecke (28) mit einem gemeinsamen Antrieb (26) verbunden ist.

3. Maschine nach Anspruch 2, dadurch gekennzeichnet, daß als Antrieb ein Motor mit steuerbarer Drehzahl, vorzugsweise ein Gleichstrommotor (26), vorgesehen ist.

4. Maschine nach einem der Ansprüche 1 bis 3, dadurch gekennzeichnet, daß zum Einstellen mindestens des zweiten Getriebes (33) ein Stellmotor (36) vorgesehen ist, der von einer Regelschaltung (40, 51, 87, 93) steuerbar ist, die die Geschwindigkeit der Werkstoffbahn (10) auf die Geschwindigkeit des Schweißwerkzeuges (16) einstellt, die dieses beim Berühren der Werkstoffbahn (10) hat.

5. Maschine nach Anspruch 4, dadurch gekennzeichnet, daß die Regelschaltung (40, 51, 87, 93) zwei Gleichstrom-Tachogeneratoren (40, 51), von denen der eine Tachogenerator (40) eine der Laufgeschwindigkeit der Werkstoffbahn (10) und der andere Tachogenerator (51) eine von der Umfangsgeschwindigkeit des Schweißwerkzeuges (16) abhängige Spannung erzeugt, ferner eine Abtast- und Halteschaltung (87), die von der vom Tachogenerator (51) des Schweißwerkzeuges (16) erzeugte Spannung nur denjenigen Wert speichert, der der Umfangsgeschwindigkeit des Schweißwerkzeuges beim Schweißen entspricht, und ein Additionsglied (93) aufweist, das die mit entgegengesetzten Vorzeichen erzeugten Spannungen der Abtast- und Halteschaltung (87) und des Tachogenerators (51) der Werkstoffbahn (10) algebraisch addiert, und daß ein Leistungsverstärker (95) vorhanden ist, der auf Grund des ihm vom Additionsglied (93) zugeführten Signals den Stellmotor (36) des zweiten Getriebes (33) so steuert, daß dieser das zweite Getriebe auf ein Übersetzungsverhältnis einstellt, bei dem das Additionsglied ein Nullsignal abgibt.

6. Maschine nach Anspruch 5, dadurch gekennzeichnet, daß in der Verbindungsleitung zwischen dem Leistungsverstärker (95) und dem Stellmotor (36) ein Schalter (60) eingeschaltet ist, der von einem Signalgeber (85) während jedes Schweißvorganges ausgeschaltet wird.

7. Maschine nach einem der Ansprüche 1 bis 6, dadurch gekennzeichnet, daß als zweites Getriebe ein Kegelscheiben-Lamellenkettengetriebe (33) vorgesehen ist.

8. Maschine nach einem der Ansprüche 1 bis 7, dadurch gekennzeichnet, daß als Vorschaltgetriebe (41) ein umlaufendes Kurbelschleifengetriebe vorgesehen ist.

9. Maschine nach Anspruch 8, dadurch gekennzeichnet, daß der Schleifenarm (61) des Kurbelschleifengetriebes mit der gleichförmig umlaufenden Welle (32) des Antriebes (26, 29) und die Kurbelwelle (43) mit dem Schweißwerkzeug (16) verbunden sind.

10. Maschine nach Anspruch 8 oder 9, dadurch gekennzeichnet, daß als Schleifenarm eine zur Schleifenarmwelle (42) diametral angeordnete, mit dieser verbundene Führungsstange (61) vorgesehen ist, auf der ein Gleitstein (62) geführt ist, an dem der Kurbelzapfen (63) befestigt ist.

11. Maschine nach Anspruch 9 oder 10, dadurch gekennzeichnet, daß die Kurbelwelle (43) in einem Lager (68) drehbar gelagert ist, das senkrecht zu seiner Achse verschiebbar und feststellbar im Maschinengestell gelagert ist und mit dem Schweißwerkzeug (16) über eine teleskopierende Kreuzgelenkwelle (46) verbunden ist.

12. Maschine nach Anspruch 11, dadurch gekennzeichnet, daß das Kurbelwellenlager (68) mit einer Stellspindel (69) verbunden und von zwei zueinander parallelen Stangen (78) geführt ist, daß eine Stellmutter (73, 74) der Stellspindel (69) drehbar aber axial unverschiebbar im Maschinengestell gelagert und mit einem Stellmotor (44) verbunden ist.

## Claims

1. Machine for handling a web of material (10) moved at an uniform speed in its longitudinal direction comprising a welding tool (16) which moves in an endless path contacting the web and is driveable at a non-uniform speed via a controllable first gearing (41) and a controllable second gearing (33), the transmission ratio of which is adjustable, for driving the web (10), characterized in that the second gearing (33) is designed for continuous adjustment of transmission ratio and that for coupling both gearings (33, 41) a coupling device (40, 51, 87, 93) is provided which, upon the adjustment of one gearing (41), automatically adjusts the other gearing (33) in such a way that during the contact of the welding tool (16) with the web of material (10) these two parts move with substantially the same speed.

2. Machine according to claim 1, wherein the first gearing (41) and the second gearing (33) are driveable by the worm gear (31) of a worm gearing (29) the worm of which is connected to a common drive (26).

3. Machine according to claim 2, wherein the drive is a variable speed motor, preferably a DC-motor (26).

4. Machine according to one of the claims 1 to 3, which, for adjusting of at least the second gearing (33) further includes a servo motor (36) controllable by a control circuit (40, 51, 87, 93) operative to adjust the speed of the web of material (10) to that speed of the welding tool (16) at which the welding tool (16) moves while it contacts the web of material (10).

5. Machine according to claim 4, wherein the control circuit (40, 51, 87, 93) includes two DC-tachogenerators (40, 51), one of which produces a voltage dependent on the speed of the web of material (10) and the other tachogenerator (51) produces a voltage dependent on the speed of the welding tool (16), further a scanning and holding circuit (87) operative to store only that value of the voltage produced by the tachogenerator (51) of the welding tool (16) corresponding to the speed of the welding tool during the welding operation, and an addition member (93) for adding algebraically the voltages of opposite signs produced by the scanning and holding circuit (87) and the tachogenerator (51) of the web of material (10), and that a power amplifier (95) is provided which, dependent on the signal delivered from the addition member (93), controls the servomotor (36) of the second gearing (33) so that the servomotor (36) adjusts the second gearing to a transmission ratio at which the addition member gives off a zero signal.

6. Machine according to claim 5, wherein a switch (60) is inserted into the connecting line between the power amplifier (95) and the servomotor (36) and is switched off during each welding operation.

7. Machine according to one of the claims 1—6, wherein the second gearing comprises cone pulleys (34) connected by a laminated chain (35).

8. Machine according to one of the claims 1—7, wherein the first gearing (41) is a rotating slot and crank gearing.

9. Machine according to claim 8, wherein the slot arm (61) of the slot and crank gearing is connected to the uniformly rotating shaft (32) of the drive (26, 29), and the crank shaft (43) to the welding tool (16).

10. Machine according to claim 8 or 9, wherein the slot arm is a guide rod (61) placed diametrically to the slot arm shaft (42) and connected to it for guiding a slide block (62) to which the crank pin (63) is fastened.

11. Machine according to claims 9 or 10, wherein the crank shaft (43) is rotatably supported by a bearing (68) the support of which in the machine frame is adapted for an adjustable displacement perpendicularly to its axis and wherein the crank shaft is connected to the welding tool (16) by means of a telescoping universal joint shaft (46).

12. Machine according to claim 11, wherein the bearing (68) of the crank shaft is connected to an adjustment spindle (69) and is guided by two rods (78) which are parallel to each other and wherein an adjustment nut (73, 74) of the adjustment spindle (69) is supported in a turnable but axially non-displaceable manner in the machine frame and is connected to a servomotor (44).

## Revendications

1. Machine pour travailler une bande de matière (10), qui se déplace avec une vitesse constante dans·sa direction longitudinale, au moyen d'un outil de soudage (16) qui circule sur une trajectoire de circulation touchant la bande de matière (10), et peut être entraînée à une vitesse non uniforme par l'intermédiaire d'un mécanisme intermédiaire réglable (41), un deuxième mécanisme réglable (33) à rapport de transmission réglable étant présent pour l'entraînement de la bande de matière (10), cette machine étant caractérisée en ce que le deuxième mécanisme (33) est construit pour le réglage sans palier du rapport de transmission et en ce qu'il est prévu un dispositif d'accouplement (40, 51, 87, 93) qui accouple les deux mécanismes (33, 41) et qui, lors du réglage de l'un des mécanismes (41) règle automatiquement l'autre mécanisme (33) de manière que, pendant le contact de l'outil de soudage (16) avec la bande de matière (10) ces deux éléments se déplacent avec une vitesse sensiblement égale.

2. Machine suivant la revendication 1, caractérisée en ce que le mécanisme intermédiaire (41) et le deuxième mécanisme (33) peuvent être entraînés par la roue à vis sans fin (31) d'un mécanisme à vis sans fin (29) dont la vis sans fin (29) est reliée à un entraînement commun (26).

3. Machine suivant la revendication 2, caractérisée en ce qu'il est prévu comme entraînement un moteur à vitesse de rotation réglable, de préférence un moteur à courant continu (26).

4. Machine suivant l'une des revendications 1 à 3, caractérisée en ce que, pour régler au moins le deuxième mécanisme (33), il est prévu un servo-moteur (36) qui peut être commandé par un circuit de réglage (40, 51, 87, 93) qui règle la vitesse de la bande de matière (10) sur la vitesse de l'outil de soudage (16) que cet outil possède lorsqu'il touche la bande de matière (10).

5. Machine suivant la revendication 4, caractérisée en ce que le circuit de réglage (40, 51, 87, 93) comprend deux génératrices tachymétriques à courant continu (40, 51) dont l'une (40) produit une tension fonction de la vitesse de circulation de la bande de matière (10) et l'autre (51) produit une tension fonction de la vitesse périphérique de l'outil de soudage (16), ainsi qu'un circuit de palpage et de maintien (87) qui, de la tension produite par la génératrice tachymétrique (51) de l'outil de soudage (16) ne mémorise que la valeur qui correspond à la vitesse périphérique de l'outil de soudage au moment du soudage, et comprend un élément additionneur (93) qui additionne algébriquement les tensions produites avec des signes opposés du circuit de palpage et de maintien (87) et de la génératrice tachymétrique (51) de la bande de matière (10), et en ce qu'il est prévu un amplificateur de puissance (95) qui, sur la base du signal qui lui est acheminé en provenance de l'élément additionneur (95), commande le servo-moteur (36) du deuxième mécanisme (33) de manière que ce moteur règle le deuxième mécanisme sur un rapport de transmission auquel l'élément additionneur émet un signal nul.

6. Machine suivant la revendication 5, caractérisée en ce que, dans la ligne de liaison entre l'amplificateur de puissance (95) et le servo-moteur (36) est intercalé un interrupteur (60) qui est mis hors circuit par un émetteur de signaux (85) pendant chaque opération de soudage.

7. Machine suivant l'une des revendications 1 à 6, caractérisée en ce qu'il est prévu, comme deuxième mécanisme, un mécanisme (33) à poulies coniques et à chaine à lamelles.

8. Machine suivant l'une des revendications 1 à 7, caractérisée en ce qu'il est prévu, comme mécanisme intermédiaire (41) un mécanisme tournant à manivelle-coulisse.

9. Machine suivant la revendication 8, caractérisée en ce que le bras de coulisse (61) du mécanisme à manivelle-coulisse est relié à l'arbre (32) tournant uniformément de l'entraînement (26, 29) et l'arbre de manivelle (43) est relié à l'outil de soudage (16).

10. Machine suivant la revendication 8 ou 9, caractérisée en ce qu'il est prévu comme bras de coulisse une barre de guidage (61) disposée diamétralement à l'arbre (42) du bras de coulisse et reliée à cet arbre, et sur laquelle est guidé un coulisseau (62) auquel le bouton de manivelle (63) est fixé.

11. Machine suivant la revendication 9 ou 10, caractérisée en ce que l'arbre de manivelle (43) est monté rotatif dans un palier (68) qui est monté dans le bâti de la machine pour pouvoir coulisser perpendiculairement à son axe et être immobilisé et est relié à l'outil de soudage (16) par l'intermédiaire d'un arbre télescopique à articulations à croisillons (46).

12. Machine suivant la revendication 11, caractérisée en ce que le palier (68) de l'arbre de manivelle est relié à une vis de positionnement (69) et est guidé par deux barres (78) parallèles entre elles, en ce qu'un écrou de positionnement (73, 74) de la vis de positionnement (69) est monté dans le bâti de la machine libre en rotation mais immobilisé en coulissement axial et est relié à un servomoteur (44).

_Fig. 1._

_Fig. 2._

0 003 998

# Fig.3.

# Fig.4.

41

28

76

77

71 75

75

74

72

73

63

62

69

65

67

45

46

64

42

43

48

68

32

66

78

59

79

61

31

29

IV

IV

69

d

68

43

78

78

81

79

82

0 003 998

11

Fig.5.